# EUROPÄISCHE PATENTANMELDUNG

(11) **EP 1 241 367 A2**
(43) Veröffentlichungstag der Anmeldung: **18.09.2002**
(21) Anmeldenummer: 01129153.1
(22) Anmeldetag: 08.12.2001
(51) Int. Cl.: F16C 27/06

(54) **Kardanwellenlager**

(30) Priorität: 14.03.2001 DE 10112453
(71) Anmelder: Carl Freudenberg KG, 69469 Weinheim (DE)
(72) Erfinder: Bade, Karl-Heinz, 69483 Waldmichelbach (DE); Schütz, Michael, 79418 Schliengen (DE)

(57) **Zusammenfassung**

Kardanwellenlager, umfassend ein Wälzlager, dessen Außenring durch ein elastisches Element mit einem an der Karosserie festlegbaren Lagerträger verbunden ist, wobei das elastische Element (16) zwei am Außenring (5) des Wälzlagers (13) angeformte Gummifalten (2, 2') umfasst, die einen umlaufenden Hohlraum (14) bilden, in welchem ein Anschlagpuffer (1) so angeordnet ist, dass das Wälzlager (13) am Trägerring (3) elastisch abstützbar ist.

## Beschreibung

Die Erfindung betrifft ein Kardanwellenlager mit einem Wälzlager, dessen Außenring durch ein elastisches Element mit einem an der Karosserie festlegbaren Lagerträger verbunden ist.

### Stand der Technik

Aus der DE 197 48 726 ist eine Lageranordnung bekannt, bei der ein Federkörper aus Elastomer den Außenring eines Wälzlagers mit einem ringförmigen, starren Gehäuseteil verbindet. Der im Querschnitt C-förmig ausgebildete Gummikörper ermöglicht eine in radialer und axialer Richtung nachgiebige Lagerung der Kardanwelle. In DE 40 33 592 wird vorgeschlagen, die Kardanwelle eines Kraftfahrzeugs durch ein elastisches Wellenlager mittels Ringlippen abzustützen.
Bis zu einer bestimmten Grenzamplitude können diese bekannten Lagersysteme Schwingungen des Wellenlagers auffangen und die Übertragung auf die Karosserie des Kraftfahrzeugs verhindern. Im Resonanzfall kann aber diese Grenzamplitude überschritten werden. Folge davon sind Anschlaggeräusche, die sich auch bei Gummiummantelung der Anschlagflächen in den Fahrzeuginnenraum fortpflanzen können. Der Fahrkomfort ist dann erheblich beeinträchtigt.
Dieses Problem wird in DE 43 17 062 durch ein hydraulisch dämpfendes Kardanwellenlager gelöst, das auch im Resonanzbereich die störende Schwingungsanregung vom Fahrgastraum fern hält. Extremauslenkungen des Lagers werden durch einen ringförmigen, flüssigkeitsgefüllten Hohlraum aufgefangen. Die Herstellung dieses hydraulisch dämpfenden Kardanwellenlagers ist aber vergleichsweise aufwendig.

### Darstellung der Erfindung

Es ist Aufgabe der Erfindung, ein Kardanwellenlager anzugeben, das in radialer und axialer Richtung so nachgiebig ist, dass Schwingungen der Kardanwelle im gesamten Betriebsbereich weitgehend von der Karosserie des Kraftfahrzeugs entkoppelt werden. Dabei soll die Herstellung einfach und mit geringem Aufwand möglich sein.

Diese Aufgabe wird erfindungsgemäß bei einem Kardanwellenlager der eingangs genannten Art mit den kennzeichnenden Merkmalen von Anspruch 1 gelöst. Auf vorteilhafte Ausgestaltungen nehmen die Unteransprüche Bezug.

Zur Lösung der Aufgabe sieht die Erfindung ein elastisches Element vor, das zwei am Außenring des Wälzlagers angeformte Gummifalten umfasst, die einen umlaufenden Hohlraum bilden, in welchem ein Anschlagpuffer so angeordnet ist, dass das Wälzlager am Lagerträger elastisch abstützbar ist. Durch die elastische Abstützung des Wälzlagers im Lagerträger gibt es keine Anschlagberührung und damit keine Anschlaggeräusche. Der elastische Anschlagpuffer und die weichelastischen Gummifalten nehmen die Vibrationslast dämpfend auf und isolieren diese im gesamten Betriebsbereich weitgehend von der Karosserie des Kraftfahrzeugs. Der im Hohlraum umlaufende Anschlagpuffer ist durch die am Außenring des Wälzlagers angeformten Gummifalten von störenden Umwelteinflüssen abgeschottet. Dadurch kann der Werkstoff für den Anschlagpuffer optimal hinsichtlich der Dämpfungs- und Isolationswirkung bemessen werden. Die Verwendung poröser Werkstoffe ist möglich.

Mit Vorteil weist das elastische Element im Bereich der Anformung einen die Gummifalten verbindenden Gummisteg auf und bildet ein einstückiges Vulkanisationsteil, das an der Außenumfangsfläche des Außenrings anvulkanisiert ist. Diese Gummi-Metall-Verbindung ist langlebig und technisch einfach herstellbar. Das einstückige Vulkanisationsteil hat bei der Herstellung die Form eines radial nach außen geöffneten U-Profils und ist in Spritzgusstechnik kostengünstig herstellbar. Das Gummiteil ist konventionell entformbar. Das Vulkanisationswerkzeug ist entsprechend einfach konstruiert.

Eine besonders gute Schwingungsisolierung erreicht man, wenn der Anschlagpuffer bei bestimmungsgemäßer Verwendung unter radialer Vorspannung zwischen Außenring und dem stützenden Trägerring steht. Vorteilhaft kann dann das Dämpfungsverhalten progressiv vorgegeben werden.

Hierbei ist bevorzugt, wenn der Anschlagpuffer durch einen offenporigen Kunststoff gebildet wird. Dank des schützenden Gummimantels können auch hinsichtlich der rauen Umgebungsbedingungen weniger beständige Werkstoffe eingesetzt werden. Besonders geeignet für die Dämpfung und die Isolation der Schwingungen ist ein Anschlagpuffer aus offenzelligem Polyurethan-Schaum. Mit diesem Material können die Rotations- und Biegeschwingungen der Kardanwelle besonders wirkungsvoll von der Karosserie isoliert werden und das elastische Kardanwellenlager kostengünstig hergestellt werden.

Von Vorteil ist, wenn jede Gummifalte jeweils durch einen in einem radial außen liegenden Abschnitt einvulkanisierten Stützring am Trägerring abstützbar ist. Der einvulkanisierte Blechring bildet eine Armierung und ermöglicht eine stabile Festlegung des weichelastischen Rollbalgs im Trägerring.

Bevorzugt wird ein Hohlquerschnitt des Rollbalgs, bei dem die Gummifalten im Wesentlichen C-förmig und axial jeweils in Richtung der gegenüberliegenden Falte offen ausgebildet sind. Dadurch kann das elastische Element extremen Auslenkbewegungen sowohl in radialer als auch in axialer Richtung weichelastisch folgen. Eine unzulässig hohe Materialbeanspruchung der Gummifalten wird durch die C-förmige Querschnittsgeometrie der Falten vermieden, was für die Lebensdauer günstig ist. Wie oben erläutert ist das Vulkanisationsteil bei der Herstellung des Rollbalgs ein im Wesentlichen radial nach außen geöffnetes U-Profil. Dessen Schenkel bilden im Einbauzustand des Kardanwellenlagers die konvex gebogenen Gummifalten des Rollbalgs. Rollbalg und Anschlagpuffer wirken in einer funktionstechnischen Parallelschaltung. Das Dämpfungs- und Isolationsverhalten des elastischen Elementes kann somit in einem weiten Bereich durch geeignete Wahl des Werkstoffes und der Querschnittsgeometrie des Anschlagpuffers und durch die Wandstärke der Gummifalten vorgegeben werden.

Es ist von Vorteil, wenn die radial außen liegenden Abschnitte der angeformten Gummifalten bei bestimmungsgemäßer Verwendung axial benachbart oder durch einen Zwischenring voneinander getrennt im Trägerring angeordnet sind. Im Einbauzustand des Kardanwellenlagers kann durch den Zwischenring der axiale Abstand der Gummifalten und dadurch die Krümmung der Falten des Ringbalgs vorgegeben werden.

Die Befestigung der Gummifalten im Trägerring erfolgt bei einer Serienfertigung vorteilhaft durch Bördel, die eine Halteklammer für die radial außen liegenden Abschnitte der Gummifalten bilden. Hierbei wird bevorzugt, wenn die Bördel an Stirnseiten des Trägerrings in Umfangsrichtung versetzt angeordnet sind. Bördeln und Einpressen erfolgen in einem Arbeitsgang.

Da das Kardanwellenlager meist in unmittelbarer Nähe zur Abgasanlage in einem Tunnel angeordnet ist, ist von Vorteil, wenn der Trägerring außenumfangsseitig durch ein Hitzeschild an der Karosserie festgelegt wird. Das Hitzeschild vermindert die Wärmeeinwirkung auf die elastischen Teile und gewährleistet dadurch gute Gebrauchseigenschaften über eine lange Lebensdauer. Für die Herstellung ist vorteilhaft, wenn das Hitzeschild als Blechring ausgebildet ist und umlaufende Sicken den Trägerring halten.

Es empfiehlt sich auch, wenn das elastische Element einen Bund aufweist, der jeweils an einer Stirnfläche des Außenrings des Wälzlagers radial nach innen vorgezogen ist. Dieser Bund ist geeignet, bei einer Taumelbewegungen der Kardanwelle axial gerichtete Auslenkbewegungen durch Formschluss aufzunehmen und entlastet dadurch die Adhäsionsverbindung des Gummi-Metall-Verbandes.
Um eine besonders gute Adhäsion zwischen Gummi und Metall zu erreichen, hat es sich bewährt, wenn die Außenumfangsfläche des Wälzlageraußenrings strukturiert ist. Dies kann mit Vorteil durch chemische, elektrochemische oder durch mechanische Oberflächenbehandlungsverfahren erfolgen.

### Kurzbeschreibung der Zeichnung

Das erfindungsgemäße Kardanwellenlager wird nachfolgend anhand der Figuren 1 bis 3 näher erläutert. Diese zeigen jeweils in schematischer Darstellung:
- Figur 1: Ein bevorzugtes Ausführungsbeispiel des erfindungsgemäßen Kardanwellenlagers in einer Querschnittsdarstellung,
- Figur 2: eine Seitenansicht der Figur 1,
- Figur 3: einen Teilschnitt der Figur 1 in vergrößerter Darstellung im Bereich der radial außen liegenden Abschnitte der Gummifalten.

### Ausführung der Erfindung

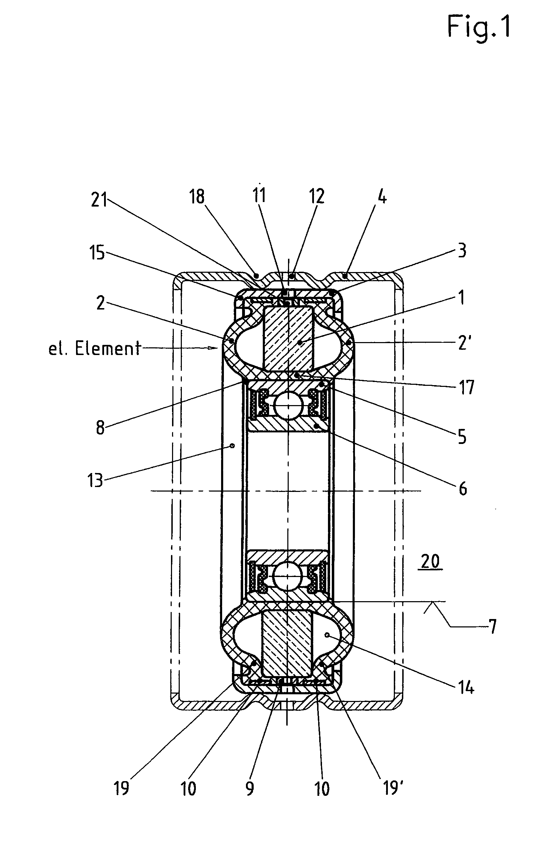

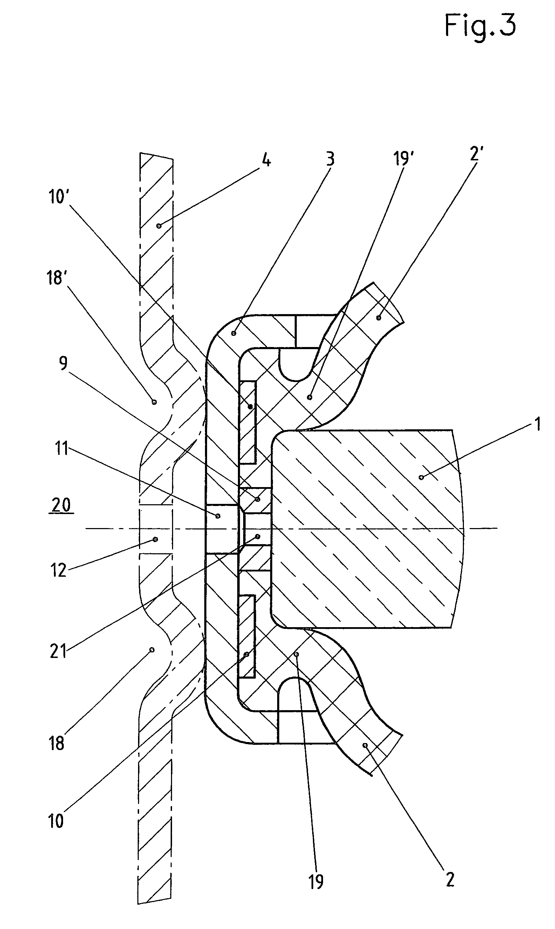

Die Figur 1 zeigt ein Ausführungsbeispiel der Erfindung, wie sie beispielsweise bei Kraftfahrzeugen verwendet werden kann. Am Außenring 5 eines Rillenkugellagers 13 ist ein Gummiteil anvulkanisiert, welches aus zwei Gummifalten 2, 2' und einem Gummisteg 17 gebildet wird. Die Gummifalten 2, 2', der Gummisteg 17 und der gegebenenfalls vorhandene Zwischenring 9 schließen einen ringförmigen Hohlraum 14 ein, in dessen Mittelbereich ein Anschlagpuffer 1 angeordnet ist. In einem Lagerträger 3 sind die radial außen liegenden Abschnitte 19, 19' (Figur 3) der Gummifalten 2 bzw. 2' und der gegebenenfalls vorhandene Zwischenring 9 durch Bördel 15 zusammengefasst. Der Trägerring 3 bildet eine Halteklammer für die Abschnitte 19, 19'. Der Anschlagpuffer 1 bildet zusammen mit den Gummifalten 2, 2' ein elastisches Element 16, welches das Wälzlager 13 im Trägerring 3 elastisch abstützt. Wie in der Zeichnung der Figur 1 leicht erkennbar, umschließt der Hohlraum 14 den Anschlagpuffer 1 ähnlich einem Gummimantel und schottet diesen von störenden Umwelteinflüssen ab. Im Querschnitt sind die Gummifalten 2, 2' C-förmig ausgebildet. Jede C-förmige Gummifalte ist jeweils in Richtung der gegenüberliegenden Falte offen ausgebildet. Dadurch wird ein Ringbalg gebildet.
Im gezeigten Ausführungsbeispiel der Figur 1 ist der Anschlagpuffer 1 als elastisch verformbarer Ringkörper mit rechteckigem Querschnitt gezeichnet. Andere Querschnittsformen sind denkbar. Gemäß der Erfindung werden Vibrationen, die sich über Innenring 6, Wälzkörper und Außenring 5 des Lagers 13 auf das elastische Element 16 übertragen, im Wesentlichen vom Anschlagpuffer 1 gedämpft und von der Karosserie des Kraftfahrzeugs isoliert. Je nach Werkstoff und radialer Vorspannung des sich im Ringspalt zwischen Außenring 5 und Trägerring 3 erstreckenden Anschlagpuffers 1 lässt sich in einem breiten Arbeitsbereich die Dämpfungs- und Isolationscharakteristik festlegen. Wenn der Anschlagpuffer bereits unter Vorspannung innerhalb des Ringspaltes angeordnet ist, wird ein progressives Dämpfungsverhalten eingestellt. Auch bei extremen Auslenkbewegungen entstehen keine Anschlaggeräusche. Das elastische Verhalten der Gummifalten 2, 2' ist von der Wanddicke, der Form und dem verwendeten Werkstoff abhängig. Die Gummifalten 2, 2' wirken in einer funktionstechnischen Parallelschaltung zum Anschlagpuffer 1. Durch die C-förmige Ausbildung der Gummifalten 2, 2' wird eine übermäßige Verformung vermieden. Die elastische Abstützung begünstigt eine lange Gebrauchsdauer des Kardanwellenlagers.
Zur Entlüftung des Hohlraums 14 sind im Zwischenring 9, im Trägerring 3 und im Hitzeschild 4 Ausnehmungen 21, 11, 12 vorgesehen. In Figur 1 sind diese Ausnehmungen als Löcher eingezeichnet, die den vom Gummimantel umschlossenen Raum 14 mit der Umgebung 20 strömungsleitend verbinden. Im radial außen liegenden Endbereich 19, 19' der Gummifalten 2, 2' sind jeweils Stützringe 10, 10' einvulkanisiert. Diese bilden eine Armierung im Elastomer und erleichtern die Befestigung im Trägerring 3.
Meist ist das Kardanwellenlager bei Kraftfahrzeugen im Kardanwellentunnel angeordnet, in dem auch die Verbindungsrohre der Abgasanlage des Kraftfahrzeuges verlaufen. Um eine unzulässige Erwärmung des Kardanwellenlagers zu vermeiden, kann es vorteilhaft sein, den Lagerträger durch ein Hitzeschild gegenüber Wärmeeinwirkung zu schützen. Ein derartiges Hitzeschild 4 ist in Figur 1 gestrichelt dargestellt. Im gezeigten Ausführungsbeispiel wird der Trägerring 3 durch Sicken 18, 18' im Hitzeschild 4 gehalten. Das Hitzeschild 4 ist an der in Figur 1 nicht dargestellten Karosserie befestigt.
Im Hinblick auf eine wirtschaftliche Herstellung des Kardanwellenlagers ist es von Vorteil, wenn das elastische Element unmittelbar am Außenring 5 des Wälzlagers 13 befestigt wird. In der gezeigten bevorzugten Ausführungsform ist das elastische Element 16 als Vulkanisationsteil ausgebildet, welches an der Außenfläche 7 des Außenrings 5 direkt anvulkanisiert ist. Eine sehr gute Adhäsion zwischen Gummi und Metall lässt sich dadurch erzielen, indem die metallische Außenumfangsfläche 7 des Lagers durch chemische, elektrochemische oder mechanische Oberflächenbehandlungsverfahren aufgeraut wird.
Ferner ist in Figur 1 das elastische Element 16 mit einem Bund 8 versehen, der jeweils an einer Stirnfläche des Wälzlagers 13 radial nach innen vorgezogen ist. Auf diese Weise erzielt man eine sehr dauerhafte Gummi-Metall-Verbindung, die auch bei häufig wiederkehrenden Extremauslenkungen und Taumelbewegungen des Lagers 13 über eine lange Gebrauchsdauer standhält.

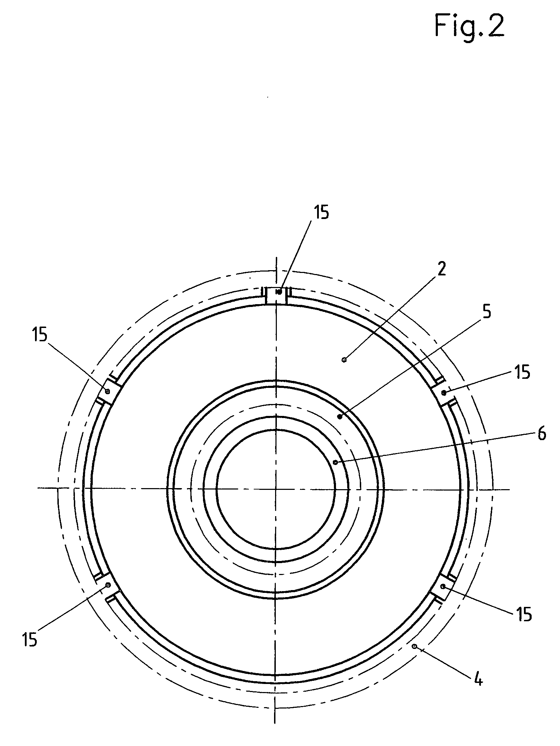

Die Zeichnungen der Figuren 1 bis 3 zeigen jeweils den Einbauzustand des erfindungsgemäßen Kardanwellenlagers. Bei der Herstellung liegen die radialen Endabschnitte 19, 19' aber nicht aneinander, sondern haben - wie bereits oben erläutert - im Vulkanisationswerkzeug die Form eines U-Profils. Die Schenkel des U-Profils, die bei der bestimmungsgemäßen Verwendung zu Rollbalgfalten 2, 2' gekrümmt sind, sind durch den Gummisteg 17 verbunden. Diese Geometrie ist für eine Serienfertigung günstig, da das Vulkanisationswerkzeug einfach aufgebaut ist und das Elastomerteil konventionell leicht entformt werden kann. Wie in Figur 3 in einer vergrößerten Darstellung gezeigt ist, werden die radialen Endabschnitte 19, 19' der beiden Gummifalten 2, 2' durch Bördel 15 des Trägerrings 3 aneinander festgelegt. In jedem der Endabschnitte 19 bzw. 19' ist eine Armierung 10 bzw. 10' in Form eines Blechrings einvulkanisiert. Auf diese Weise lässt sich, ggf. in Verbindung mit dem Zwischenring 9, der Rollbalg stabil im Trägerring 3 festlegen. Die Schnittzeichnung zeigt, das der Trägerring 3 die radialen Endabschnitte 19, 19' ähnlich einer Halteklammer zusammenhält. Die Löcher 11, 12 und 21 dienen, wie bereits oben erwähnt, zur Entlüftung des Hohlraums 14.

Für den Anschlagpuffer 1 kommt ein breites Spektrum von elastischen Werkstoffen zum Einsatz. Durch den schützenden Gummimantel, gebildet durch die Falten 2, 2' und den Trägerring 3, ist der Puffer 1 ausgezeichnet vor äußeren Einflüssen, wie beispielsweise Verunreinigungen in Form von Feuchtigkeit und/oder Staub, geschützt. Dies ist günstig für das Alterungsverhalten des Pufferwerkstoffes und bedeutet, dass bei der Auswahl des Dämpfungswerkstoffes für den Anschlagpuffer 1 keine Rücksicht auf die Umgebung genommen zu werden braucht. Der Pufferwerkstoff kann optimal an die jeweiligen Gegebenheiten des Anwendungsfalles angepasst werden. Dem Fachmann steht dadurch ein breites Spektrum einsetzbarer elastischer Werkstoffe bis hin zu offenzelligem Schaumstoff zur Verfügung. Mikrozelluläres Polyurethan hat sich als Werkstoff besonders vorteilhaft erwiesen Selbstverständlich kann der Anschlagpuffer auch aus mehreren Ringlagen gleicher oder unterschiedlicher Werkstoffe gebildet werden, die beispielsweise eine progressive Dämpfungscharakteristik vorgeben.
Die Gummifalten 2, 2' können vergleichsweise dünnwandig ausgeführt und durch einen Werkstoff mit geringer Shore-Härte gebildet werden. Die Verformungsarbeit im Elastomer ist dann gering, was für die Lebensdauer der Falten günstig ist.
Die Festlegung des Anschlagpuffers 1 am Gummisteg 17 bzw. an der Außenumfangsfläche 7 des Außenrings 5 kann beispielsweise durch Anvulkanisieren oder Kleben erfolgen.

## Patentansprüche

1. Kardanwellenlager, umfassend ein Wälzlager, dessen Außenring durch ein elastisches Element mit einem an der Karosserie festlegbaren Trägerring verbunden ist, **dadurch gekennzeichnet, dass** das elastische Element (16) zwei am Außenring (5) des Wälzlagers (13) angeformte Gummifalten (2, 2') umfasst, die einen umlaufenden Hohlraum (14) bilden, in welchem ein Anschlagpuffer (1) so angeordnet ist, dass das Wälzlager (13) am Trägerring (3) elastisch abstützbar ist.

2. Kardanwellenlager nach Anspruch 1, **dadurch gekennzeichnet, dass** das elastische Element (16) im Bereich der Anformung einen die Gummifalten (2, 2') verbindenden Gummisteg (17) aufweist, um ein einstückiges Vulkanisationsteil zu bilden, das an der Außenumfangsfläche (7) des Außenrings (5) anvulkanisiert ist.

3. Kardanwellenlager nach Anspruch 1 oder 2, **dadurch gekennzeichnet, dass** der Anschlagpuffer (1) bei bestimmungsgemäßer Verwendung unter radialer Vorspannung zwischen Außenring (5) und dem stützenden Trägerring (3) steht.

4. Kardanwellenlager nach einem der vorstehenden Ansprüche, **dadurch gekennzeichnet, dass** der Anschlagpuffer (1) durch einen offenporigen Kunststoff, bevorzugt aus einem offenzelligen PU-Schaum, gebildet wird.

5. Kardanwellenlager nach einem der vorstehenden Ansprüche, **dadurch gekennzeichnet, dass** jede Gummifalte (2, 2') jeweils durch einen in einem radial außen liegenden Abschnitt (19, 19') einvulkanisierten Stützring (10, 10') am Trägerring (3) abstützbar ist.

6. Kardanwellenlager nach Anspruch 5, **dadurch gekennzeichnet, dass** die Abschnitte (19, 19') bei bestimmungsgemäßer Verwendung axial benachbart oder durch einen Zwischenring (9) getrennt im Trägerring (3) angeordnet sind.

7. Kardanwellenlager nach einem der vorstehenden Ansprüche, **dadurch gekennzeichnet, dass** die Gummifalten (2, 2') im Wesentlichen C-fömig, axial jeweils in Richtung der gegenüberliegenden Falte offen ausgebildet sind.

8. Kardanwellenlager nach einem der Ansprüche 5 oder 6, **dadurch gekennzeichnet, dass** der Trägerring (3) Bördel (15) aufweist, die eine Halteklammer für die radial außen liegenden Abschnitte (19, 19') bilden.

9. Kardanwellenlager nach Anspruch 8, **dadurch gekennzeichnet, dass** die Bördel (15) an Stirnseiten in Umfangsrichtung des Trägerrings (3) gesehen versetzt angeordnet sind.

10. Kardanwellenlager nach einem der vorstehenden Ansprüche, **dadurch gekennzeichnet, dass** der Trägerring (3) außenumfangsseitig durch ein Hitzeschild (4) an der Karosserie festgelegt ist.

11. Kardanwellenlager nach Anspruch 10, **dadurch gekennzeichnet, dass** das Hitzeschild (4) als Blechring ausgebildet ist und umlaufende Sicken (18, 18') den Trägerring (3) halten.

12. Kardanwellenlager nach einem der vorstehenden Ansprüche, **dadurch gekennzeichnet, dass** das elastische Element (16) einen Bund (8) aufweist, der jeweils an einer Stirnfläche des Wälzlagers (13) radial nach innen vorgezogen ist.

13. Kardanwellenlager nach einem der vorstehenden Ansprüche, **dadurch gekennzeichnet, dass** zur Entlüftung des Hohlraumes (14) Ausnehmungen (11; 12; 21) vorgesehen sind, die den Hohlraum mit der Umgebung (20) strömungsleitend verbinden.

14. Kardanwellenlager nach einem der vorstehenden Ansprüche, **dadurch gekennzeichnet, dass** die Außenumfangsfläche (7) des Außenrings (5) elektrochemisch strukturiert ist.
